# EUROPEAN PATENT APPLICATION

(11) **EP 4 063 241 A1**
(43) Date of publication of application: **28.09.2022**
(21) Application number: 21218307.3
(22) Date of filing: 30.12.2021
(51) Int. Cl.: B62D 25/20, B60K 1/04, B60R 13/08

(54) **UNDERCOVER STRUCTURE FOR VEHICLE**

(30) Priority: 22.03.2021 JP 2021047025
(71) Applicant: Suzuki Motor Corporation, Shizuoka 432-8611 (JP)
(72) Inventor: TAKAICHI, Kota, Hamamatsu-shi, Shizuoka 432-8611 (JP)
(74) Representative: Henkel & Partner mbB

(57) **Abstract**

[Problem to be Solved] To efficiently mitigate impact and noise caused by collision of foreign matter or obstacles with an undercover and to efficiently protect a battery pack from this impact, in an undercover structure for a vehicle.

[Solution] An undercover structure for a vehicle of the present invention includes an undercover that covers a battery pack, located below a vehicle floor assembly, from below, the undercover includes a front panel and a rear panel on a rear side of the front panel and includes a coupling region formed such that a rear end region of the front panel and a front end region of the rear panel are coupled, the coupling region is arranged on a front side of the battery pack, a front panel includes a body portion arranged in a vehicle horizontal direction and a projecting portion that is deformed so as to project upward from the body portion, and the projecting portion includes one or more inclined surface portions formed so as to incline from an outer periphery of the projecting portion toward the inner periphery of the projecting portion, in a plan view, from a lower part toward a upper part.

## Description

### [Technical Field]

The present invention relates to an undercover structure for a vehicle having an undercover that covers a battery pack, located below a floor assembly of the vehicle, from below.

### [Background Art]

In many cases, vehicles configured to be able to drive using a motor, for example, electric automobiles each have a battery pack, which supplies the motor with electric power, arranged below a floor assembly. Such a vehicle has an undercover that covers the battery pack from below to protect it. In consideration of assembly efficiency, strength, etc., the undercover may be configured to connect a front panel and a rear panel located on a vehicle rear side of the front panel.

One example of the undercover structure for vehicle including the undercover is an undercover structure for a vehicle in which: an undercover is configured such that it is divided into two parts, a front half (front panel) and a rear half (rear panel), which are connected to each other; the connection part between the front half and the rear half is arranged so as to pass below the battery pack; and the front half and the rear half of the undercover each have a flat plate portion (body portion) facing the bottom of the battery pack. (See, for example, Patent Literature 1, in particular, paragraphs [0023] to [0025], Figures 1 and 2.)

### [Citation List]

### [Patent Literature]

[Patent Literature 1] JP 2013-147070 A

### [Summary of Invention]

### [Problems to be Solved by the Invention]

However, in the one example of the undercover structure described above, the body portions of the front panel and the rear panel of the undercover are only formed flat. So, foreign matter such as pebbles and muddy water splashed up by the wheels, in particular the front wheels, or obstacles such as steps of sidewalks, curbs, and car stoppers on which the vehicle can ride over tend to collide with the undercover from the front and bottom of the vehicle.

Therefore, the undercover in the one example of the undercover structure described above may not sufficiently absorb the impact caused by the collision of such foreign matter or obstacles. In this case, the undercover may not sufficiently protect the battery pack. Furthermore, collisions of foreign matter or obstacles with the undercover may generate unpleasant noise for the occupants, around the undercover.

Considering the above circumstances, it is desired in an undercover structure for a vehicle to efficiently mitigate impact and noise caused by collisions of foreign matter or obstacles with an undercover and to efficiently protect a battery pack from such impact.

### [Means for Solving the Problems]

To solve the problems, an undercover structure for vehicle according to one aspect is an undercover structure for a vehicle including an undercover that covers a battery pack from below, the battery pack being located below a floor assembly of the vehicle, the undercover having a front panel and a rear panel located on a vehicle rear side of the front panel, a coupling region being formed such that a rear end region of the front panel in a vehicle front-rear direction and a front end region of the rear panel in the vehicle front-rear direction are coupled, wherein: the coupling region is arranged on a vehicle front side of the battery pack; the front panel includes a body portion arranged in a vehicle horizontal direction and a projecting portion deformed so as to project upward from the body portion; and the projecting portion includes one or more inclined surface portions formed so as to incline from an outer periphery of the projecting portion toward the inner periphery of the projecting portion, in a plan view, from a lower part toward an upper part.

### [Advantageous Effects of Invention]

In the undercover structure for vehicle according to the one aspect, impact and noise caused by collisions of foreign matter or obstacles with the undercover can be efficiently mitigated, and the battery pack can be efficiently protected from such impact.

### [Brief Description of Drawings]

[Figure 1] Figure 1 is an exploded perspective view schematically showing a vehicle having an undercover structure for a vehicle according to the present embodiment in a state in which a battery pack and an undercover are disassembled.
[Figure 2] Figure 2 is a bottom view schematically showing an undercover structure for a vehicle according to the present embodiment.
[Figure 3] Figure 3 is a cross-sectional view taken along a line X-X of Figure 2.
[Figure 4] Figure 4 is a cross-sectional view taken along a line Y-Y of Figure 2.
[Figure 5] Figure 5 is a cross-sectional view taken along a line Z-Z of Figure 2.

### [Mode for Carrying Out the Invention]

An undercover structure for a vehicle according to one embodiment is to be described together with a vehicle provided with the undercover structure. The vehicle provided with the undercover structure for vehicle (hereinafter, simply referred to as "undercover structure", if necessary) according to the present embodiment is an electric automobile. However, the vehicle can also be an electric vehicle other than an electric automobile that can be provided with an undercover structure.

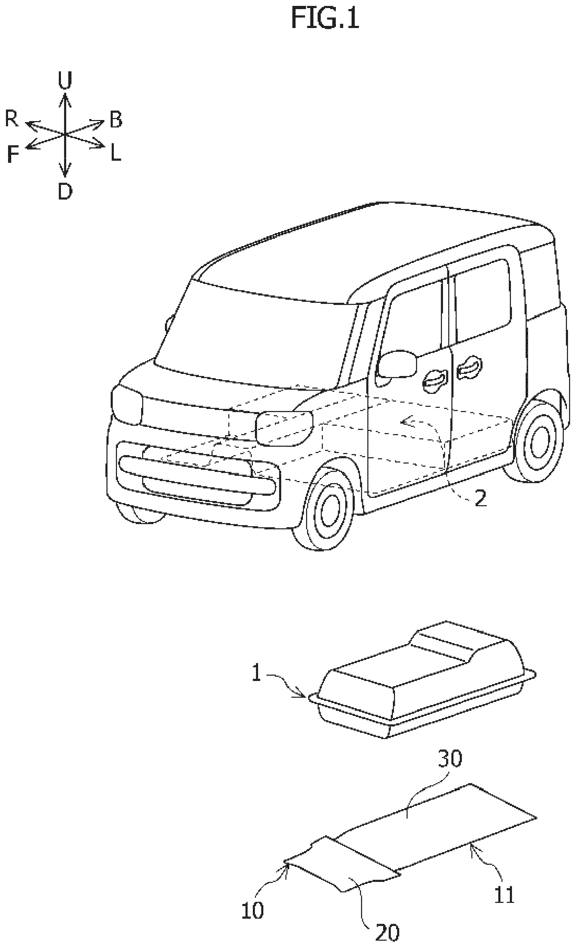

In Figures 1 to 5 used for the description herein, the direction with respect to the vehicle is indicated as follows. In Figures 1 to 3 and 5, the front side of the vehicle and the rear side of the vehicle are indicated by one-sided arrows F and one-sided arrows B, respectively. In Figures 1, 2, and 4, the left side and the right side facing the front side of the vehicle are indicated by one-sided arrows L and one-sided arrows R, respectively. A vehicle width direction is indicated by a one-sided arrow L and one-sided arrow R. Furthermore, in Figures 1, and 3 to 5, the upside of the vehicle and the downside of the vehicle are indicated by one-sided arrows U and one-sided arrows D, respectively.

Note that the left side and right side are intended to mean the left side and right side facing the front side of the vehicle, respectively. The horizontal direction is intended to mean the direction extending in the vehicle front-rear direction and the vehicle width direction. In some cases, the upside of the vehicle and the downside of the vehicle are simply referred to as the upside and the downside, respectively.

### Outline of Undercover Structure for Vehicle and Vehicle

An outline of the undercover structure for vehicle 10 and the vehicle according to the present embodiment will be described with reference to Figures 1 to 5. In other words, the undercover structure for vehicle 10 and the vehicle according to the present embodiment are schematically configured as follows. The undercover structure for vehicle 10 is provided on the vehicle as shown in Figure 1. The vehicle has a battery pack 1 and a floor assembly 2. The battery pack 1 is located below the floor assembly 2. The undercover structure 10 has an undercover 11 that covers the battery pack 1 from below.

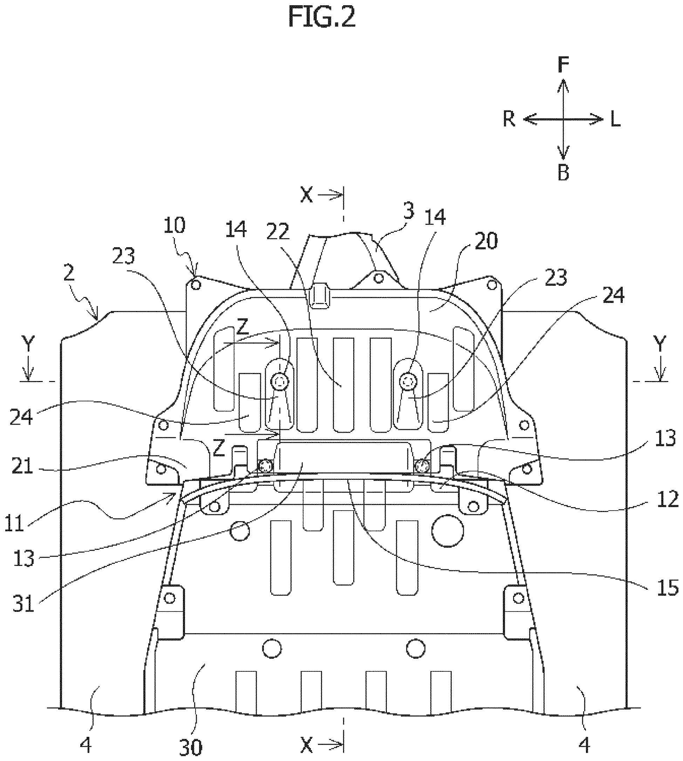

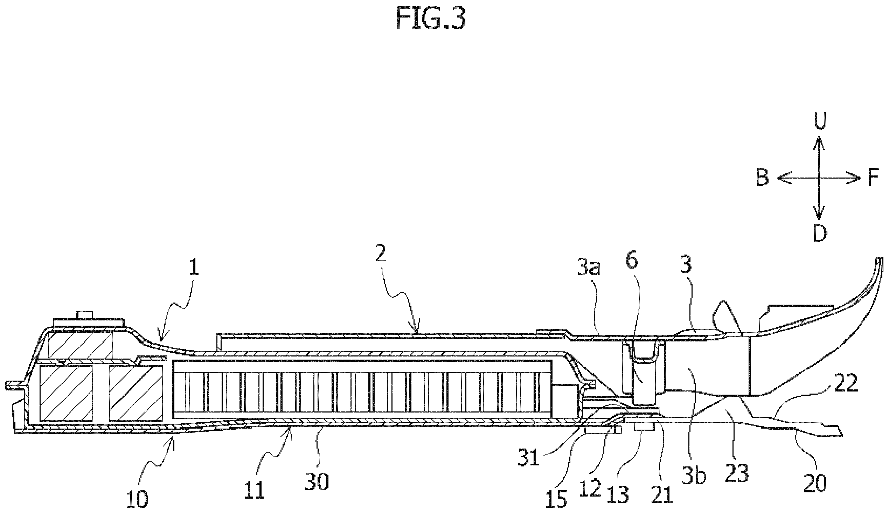

As shown in Figures 2 and 3, the undercover 11 has a front panel 20 and a rear panel 30 located on a vehicle rear side of the front panel 20. The undercover structure 10 has a coupling region 12 formed to couple the rear end region 21 of the front panel 20 in the vehicle front-rear direction with the front end region 31 of the rear panel 30 in the vehicle front-rear direction.

As shown in Figure 3, the coupling region 12 is arranged on a vehicle front side of the battery pack 1. As shown in Figures 3 to 5, the front panel 20 has a body portion 22 arranged in a vehicle horizontal direction. The front panel 20 also has a projecting portion 23 that is deformed so as to project upward from the body portion 22. The projecting portion 23 has one or more inclined surface portions 23a, 23b, 23c, and 23d that are formed so as to incline from the outer periphery toward the inner periphery of the projecting portion 23 in a plan view from the lower part toward the upper part.

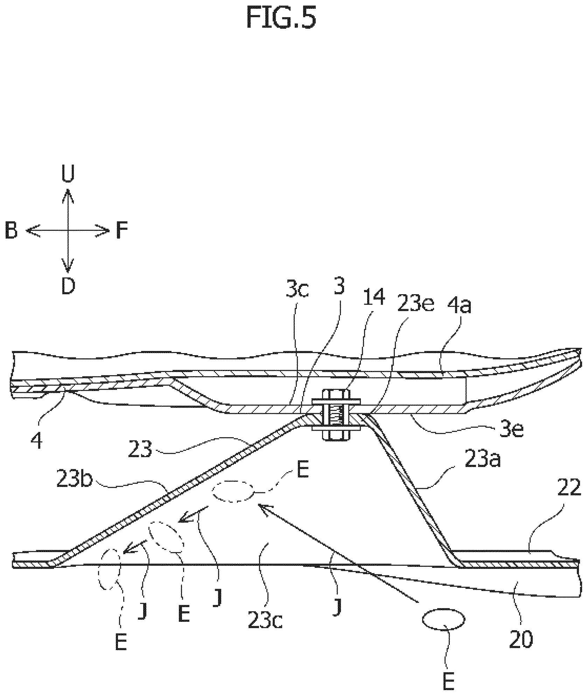

Furthermore, the undercover structure for vehicle 10 and the vehicle according to the present embodiment can be schematically configured as follows. As shown in Figure 5, the plurality of inclined surface portions 23a to 23d include a front inclined surface portion 23a located on a front end side of the projecting portion 23 in the vehicle front-rear direction. The plurality of inclined surface portions 23a to 23d include a rear inclined surface portion 23b located on a rear end side of the projecting portion 23 in the vehicle front-rear direction. The inclination angle of the rear inclined surface portion 23b with respect to the up-down direction is greater than the inclination angle of the front inclined surface portion 23a with respect to the up-down direction.

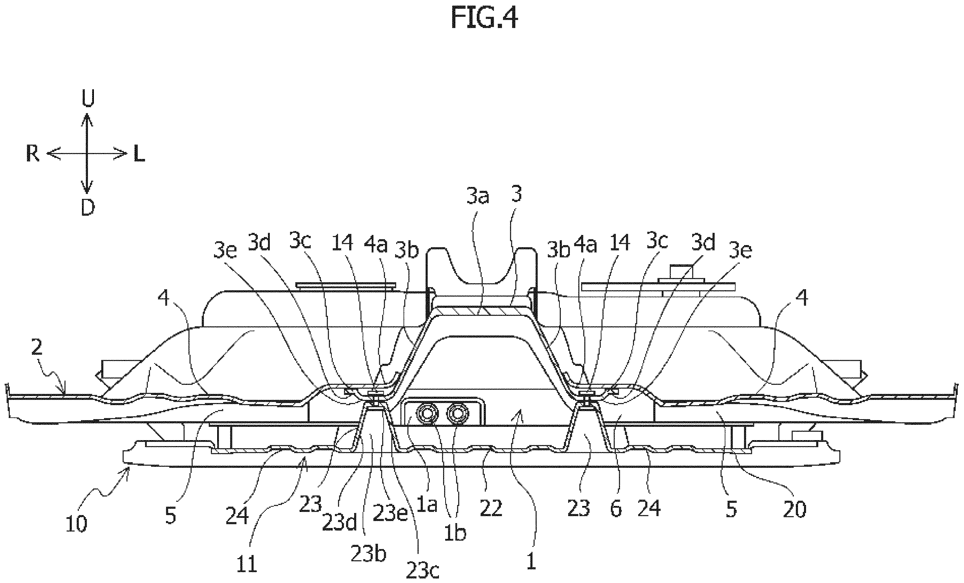

As shown in Figures 3 and 4, the floor assembly 2 has a floor tunnel 3 located substantially in the center in the vehicle width direction. The floor tunnel 3 is formed so as to bulge upward and extend in the vehicle front-rear direction. With reference to Figures 2 to 4, the front panel 20 has a plurality of projecting portions 23. Each projecting portion 23 is located on either side in the vehicle width direction with respect to the floor tunnel 3.

As shown in Figure 5, the projecting portion 23 has a top surface portion 23e located at the upper end thereof. The top surface portion 23e is fastened to the floor assembly 2.

### Details of Vehicle

With reference to Figures 1 to 4, the vehicle can be configured in detail as follows. With reference to Figures 1, 3 and 4, the battery pack 1 for a vehicle is configured to be capable of supplying electric power to a motor (not shown) used to drive the vehicle. Furthermore, the battery pack 1 is configured to be rechargeable.

As shown in Figure 4, the battery pack 1 has a connector 1a connected to a high voltage cable 1b configured to be able to supply electric power to the outside and receive electric power from the outside of the battery pack 1. The connector 1a is arranged so as to overlap the floor tunnel 3 in the vehicle width direction.

With reference to Figures 2 to 4, the floor assembly 2 has two floor panels 4 respectively located on the opposite lateral sides with respect to the floor tunnel 3 in the vehicle width direction. With reference to Figure 4, the floor assembly 2 has two lateral cross members 5 respectively located below the two floor panels 4. With reference to Figures 3 and 4, the floor assembly 2 has a central cross member 6 located below the floor tunnel 3. The central cross member 6 extends so as to couple the two lateral cross members 5.

As shown in Figure 4, the floor tunnel 3 is formed so as to have a substantially hat-shaped cross section. The floor tunnel 3 has a top surface portion 3a located at the upper end thereof. The floor tunnel 3 has two lateral surface portions 3b respectively extending downward from the opposite lateral ends of the top surface portion 3a in the vehicle width direction. The two lateral surface portions 3b are formed so as to increase the distance between the two lateral surface portions 3b from the upper part toward the lower part. The floor tunnel 3 has two flange portions 3c respectively projecting from the lower ends of the two lateral surface portions 3b toward the opposite lateral sides in the vehicle width direction.

Each flange portion 3c has a flange body area 3d extending in the projecting direction thereof. Each flange portion 3c also has a flange recessed area 3e that is located between the lateral surface portion 3b and the flange body area 3d of the flange portion 3c, each corresponding in the projecting direction, and that is recessed downward with respect to the flange body area 3d.

In the floor assembly 2, each floor panel 4 has an inner edge portion 4a located at the inner end in the vehicle width direction. The two flange portions 3c of the floor tunnel 3 are respectively located below the inner edge portions 4a of the two floor panels 4. In this case, the inner edge portions 4a of the two floor panels 4 extend so as to cross the flange recessed areas 3e of the two flange portions 3c in the floor tunnel 3, respectively. However, two flange portions of the floor tunnel can also be located above the two inner edge portions of the floor panels, respectively.

The flange body areas 3d of the two flange portions 3c in the floor tunnel 3 respectively overlap the two inner edge portions 4a of the floor panels 4 in the up-down direction, and are respectively joined to the two inner edge portions 4a of the floor panels 4 by welding. The two lateral surface portions 3b in the floor tunnel 3 also respectively overlap the two inner edge portions 4a of the floor panels 4 in the up-down direction, and are respectively joined to the two inner edge portions 4a of the floor panels 4 by welding. However, these joins can also be obtained by joining means other than welding.

With reference to Figure 3, in the floor assembly 2, the two lateral cross members 5 and the central cross member 6 are in line in the vehicle width direction. The two lateral cross members 5 and the central cross member 6 extend in the vehicle width direction. The two lateral cross members 5 and the central cross member 6 are located so as to overlap the coupling region 12 of the undercover 11 in the vehicle front-rear direction.

With reference to Figure 4, the two lateral cross members 5 are respectively in contact with the two floor panels 4 in the up-down direction, and are respectively joined by welding to the two floor panels 4. With reference to Figures 3 and 4, the central cross member 6 is in contact with the floor tunnel 3 in the up-down direction, and is joined to the floor tunnel 3 by welding. However, these joins can also be obtained by joining means other than welding.

### Details of Undercover Structure for Vehicle

With reference to Figures 2 to 5, the undercover structure for vehicle 10 can be configured in detail as follows. The front panel 20 has two lateral regions 24 respectively located on the opposite lateral sides with respect to the floor tunnel 3 in the vehicle width direction. Although not specifically shown, the two lateral regions 24 are located below the driver's seat and the passenger seat, respectively. As shown in Figure 3, the rear panel 30 is in contact with the battery pack 1 in the up-down direction.

With reference to Figures 2 and 3, the undercover 11 has two intermediate mounting portions 13 configured to mount coupling region 12 of the undercover 11 to the central cross member 6. The two intermediate mounting portions 13 are located on an outer side of the two front mounting portions 14 to be described below in the vehicle width direction. However, at least one of the two intermediate mounting portions can also be located between the two front mounting portions in the vehicle width direction. An undercover can have one, or three or more intermediate mounting portions.

Specifically, each intermediate mounting portion 13 is configured to be fastened to the central cross member 6 by fastening means using a bolt or screw and a nut, in a state in which the front end region 31 of the rear panel 30 and the rear end region 21 of the front panel 20 overlap in the up-down direction. However, this fastening can also be obtained by fastening means other than fastening means using bolts or screws and nuts. For an intermediate mounting portion, means other than the fastening means can also be used.

With reference to Figures 2 to 5, the front panel 20 has one projecting portion 23 located on one side in the vehicle width direction with respect to the floor tunnel 3, and one projecting portion 23 located on the other side in the vehicle width direction with respect to the floor tunnel 3. In this case, the front panel 20 has two projecting portions 23. The top surface portions 23e of the two projecting portions 23 is in contact with the two flange recessed areas 3e of the flange portions 3c in the floor tunnel 3, respectively.

Furthermore, the undercover 11 has two front mounting portions 14 configured to mount the two top surface portions 23e of the projecting portions 23 to the two flange recessed areas 3e of the flange portions 3c in the floor tunnel 3, respectively. The two front mounting portions 14 are configured to fasten the two top surface portions 23e of the projecting portions 23 to the two flange recessed areas 3e of the flange portions 3c, respectively, by fastening means using bolts or screws and nuts. In other words, at each front mounting portion 14, the top surface portion 23e of the projecting portion 23 and the flange recessed area 3e of the flange portion 3c of the floor tunnel 3 that is in contact with the top surface portion 23e are fastened together by fastening means using a bolt or screw and a nut.

Therefore, if foreign matter E, such as a pebble or muddy water, splashes up from below by a wheel, in particular by a front wheel, into the projecting portion 23, it would be difficult for the foreign matter E to come into contact with the fastening means located on the top surface portion 23e of the projecting portion 23. As a result, it is possible to prevent impact and noise caused by the collision of the foreign matter E with the fastening means such as a bolt, a screw, and a nut. Furthermore, since the fastening means is located on the top surface portion 23e of the upper end of the projecting portion 23, it would be difficult for the fastening means to come into contact with water if the vehicle travels on a submerged road, enabling the fastening means to avoid corrosion and the like. The connector 1a of the battery pack 1 is located between these two projecting portions 23 when viewed from the front of the vehicle.

However, this fastening can also be obtained by fastening means other than fastening means using bolts or screws and nuts. Furthermore, a front panel may also have one or more projecting portions located on one side in the vehicle width direction with respect to the floor tunnel, and one or more projecting portions located on the other side in the vehicle width direction with respect to the floor tunnel. In particular, a front panel may also have one or more projecting portions fastened to one of the two flange recessed areas in the flange portions, and one or more projecting portions fastened to the other of the two flange recessed areas in the flange portions. A front panel may also have one or more projecting portions that are fastened to the floor panel. An undercover can have one, or three or more front mounting portions.

Furthermore, as shown in Figure 2, the undercover 11 has a battery pack guard 15 located below the front end region 31 of the rear panel 30. The battery pack guard 15 is arranged so as to be adjacent to the coupling region 12 of the undercover 11 in the vehicle front-rear direction. The battery pack guard 15 is arranged in the vehicle width direction. The battery pack guard 15 extends over the entire front end region 31 of the rear panel 30. The battery pack guard 15 can be formed in a pipe shape.

As shown in Figure 4, each projecting portion 23 has a left inclined surface portion 23c located on the left end side in the vehicle width direction. Each projecting portion 23 also has a right inclined surface portion 23d located on the right end side in the vehicle width direction. In the front panel 20, the lower ends of the inclined surface portions 23a to 23d in each projecting portion 23 are coupled to the body portion 22. In the front panel 20, each projecting portion 23 is formed integrally with the body portion 22.

As described above, the undercover structure for vehicle 10 according to the present embodiment is an undercover structure for vehicle 10 including an undercover 11 that covers a battery pack 1, located below a vehicle floor assembly 2, from below, the undercover 11 having a front panel 20 and a rear panel 30 located on a vehicle rear side of the front panel 20; a coupling region 12 being formed such that a rear end region 21 of the front panel 20 in a vehicle front-rear direction and a front end region 31 of the rear panel 30 in the vehicle front-rear direction are coupled, wherein: the coupling region 12 is arranged on a vehicle front side of the battery pack 1; the front panel 20 has a body portion 22 arranged in the vehicle horizontal direction and a projecting portion 23 deformed so as to project upward from the body portion 22; and the projecting portion 23 has one or more inclined surface portions 23a to 23d formed so as to incline from an outer periphery of the projecting portion 23 toward the inner periphery of the projecting portion 23, in a plan view, from a lower part toward an upper part.

Normally, when the vehicle is running, foreign matter such as pebbles and muddy water flipped up from below by the wheels, in particular the front wheels, or obstacles such as steps of sidewalks, curbs, and car stoppers on which the vehicle can ride on easily collide with a front part of the undercover in the vehicle front-rear direction from the front and bottom of the vehicle. In contrast, in the undercover structure 10 according to the present embodiment, the front panel 20 is arranged on the vehicle front side of the battery pack 1, so that a space having a height corresponding to the thickness of the battery pack 1 can be formed between the front panel 20 and the floor assembly 2. Therefore, such a space can efficiently mitigate the impact from the undercover 11 to the battery pack 1 due to foreign matter E (shown in Figure 5) or obstacles, from the front and bottom of the vehicle.

In addition, the projecting portion 23 can efficiently improve the rigidity of the undercover 11. In particular, as shown in Figure 5, the inclined surface portions 23a to 23d of the projecting portion 23, as shown by a one-sided arrow J, can release the foreign matter E in order to prevent the foreign matter E from repeatedly colliding with the undercover 11. Therefore, according to the undercover structure for vehicle 10 according to the present embodiment, the impact and noise caused by the collision of foreign matter E or obstacles can be efficiently mitigated. Furthermore, the battery pack 1 can be efficiently protected from such impact.

In the undercover structure for vehicle 10 according to the present embodiment, the plurality of inclined surface portions 23a to 23d have a front inclined surface portion 23a located on the front end side of the projecting portion 23 in the vehicle front-rear direction and a rear inclined surface portion 23b located on the rear end side of projecting portion 23 in the vehicle front-rear direction, and the inclination angle of the rear inclined surface portion 23b with respect to the up-down direction is greater than the inclination angle of the front inclined surface portion 23a with respect to the up-down direction.

In such an undercover structure 10, the front inclined surface portion 23a and the rear inclined surface portion 23b of the projecting portion 23, can efficiently release foreign matter E from the front and bottom of the vehicle so as to roll on the ground toward the rear of the vehicle. Furthermore, it is possible to prevent the foreign matter E that has entered the projecting portion 23 from repeatedly colliding with the projecting portion 23. As a result, it is possible to prevent the generation of noise due to this repeated collision.

In the undercover structure for vehicle 10 according to the present embodiment, the floor assembly 2 has a floor tunnel 3 located in the center in the vehicle width direction, the floor tunnel 3 bulges upward and is formed so as to extend in the vehicle front-rear direction, the front panel 20 has a plurality of the projecting portions 23, and each projecting portion 23 is located on either side in the vehicle width direction with respect to the floor tunnel 3.

Normally, when the vehicle is running, foreign matter flipped up by the wheels, in particular the front wheels, easily collide with the undercover, in particular the lateral side part of the front panel in the vehicle width direction from the front and bottom of the vehicle and the outside in the vehicle width direction. In contrast, in the undercover structure 10 according to the present embodiment, the projecting portion 23 is arranged in the lateral region 24 of the front panel 20 located on either side in the vehicle width direction with respect to the floor tunnel 3, so that the projecting portion 23 can efficiently mitigate the impact and noise caused by collision of foreign matter E.

In the undercover structure for vehicle 10 according to the present embodiment, the projecting portion 23 has a top surface portion 23e located at the upper end thereof, and the top surface portion 23e is fastened to the floor assembly 2. In such an undercover structure 10, the projecting portion 23 fastened to the floor assembly 2 can efficiently improve the rigidity of the undercover 11. Therefore, the impact and noise caused by the collision of the foreign matter E or the obstacles can be efficiently mitigated.

An embodiment of the present invention is described above, but the present invention is not limited to the above-described embodiment, and the present invention can be modified and altered based on the technical concept thereof.

### [Reference Signs List]

1... battery pack, 2... floor assembly, 3... floor tunnel
10... undercover structure for vehicle (undercover structure), 11... undercover, 12... coupling region
20... front panel, 21... rear end region, 22... body portion, 23... projecting portion, 23a... inclined surface portion, front inclined surface portion, 23b... inclined surface portion, rear inclined surface portion, 23c... inclined surface portion, left inclined surface portion 23d... inclined surface portion, right inclined surface portion, 23e... top surface portion
30... rear panel, 31... front end region

## Claims

1. An undercover structure for a vehicle, comprising an undercover that covers a battery pack from below, the battery pack being located below a floor assembly of the vehicle,
the undercover having a front panel and a rear panel located on a vehicle rear side of the front panel,
a coupling region being formed such that a rear end region of the front panel in a vehicle front-rear direction and a front end region of the rear panel in the vehicle front-rear direction are coupled,
wherein:
the coupling region is arranged on a vehicle front side of the battery pack;
the front panel includes a body portion arranged in a vehicle horizontal direction and a projecting portion deformed so as to project upward from the body portion; and
the projecting portion includes one or more inclined surface portions formed so as to incline from an outer periphery of the projecting portion toward the inner periphery of the projecting portion, in a plan view, from a lower part toward an upper part.

2. The undercover structure for vehicle according to claim 1, wherein:
the plurality of inclined surface portions include a front inclined surface portion located on a front end side of the projecting portion in the vehicle front-rear direction and a rear inclined surface portion located on a rear end side of the projecting portion in the vehicle front-rear direction; and
an inclination angle of the rear inclined surface portion with respect to the up-down direction is greater than an inclination angle of the front inclined surface portion with respect to the up-down direction.

3. The undercover structure for vehicle according to claim 1 or 2, wherein:
the floor assembly includes a floor tunnel located in a center of the floor assembly in the vehicle width direction;
the floor tunnel is formed so as to bulge upward and extend in the vehicle front-rear direction;
the front panel includes a plurality of the projecting portions; and
each projecting portion is located on either side in a vehicle width direction with respect to the floor tunnel.

4. The undercover structure for vehicle according to any one of claims 1 to 3, wherein:
the projecting portion includes a top surface portion located at an upper end of the projecting portion; and
the top surface portion is fastened to the floor assembly.
